# EUROPEAN PATENT SPECIFICATION

(11) **EP 3 088 760 B1**
(45) Date of publication and mention of the grant of the patent: **09.01.2019**
(21) Application number: 16166308.3
(22) Date of filing: 21.04.2016
(51) Int. Cl.: F16D 27/112

(54) **ELECTROMAGNETIC CLUTCH HAVING IMPROVED CLUTCH PULL FORCE**
ELEKTROMAGNETISCHE KUPPLUNG MIT VERBESSERTER KUPPLUNGSZIEHKRAFT
EMBRAYAGE ÉLECTROMAGNÉTIQUE PRÉSENTANT UNE MEILLEURE FORCE DE TRACTION D'EMBRAYAGE

(30) Priority: 27.04.2015 US 201562153035 P
(43) Date of publication of application: 02.11.2016
(73) Proprietor: Mahle International GmbH, 70376 Stuttgart (DE)
(72) Inventor: LE, Anh, LOCKPORT, NY New York 14094 (US); BREINDEL, John A., GETZILLE, NY New York 14068 (US)
(74) Representative: BRP Renaud & Partner mbB Rechtsanwälte Patentanwälte Steuerberater

(56) References cited:
- DE-A1- 3 000 358
- FR-A- 1 130 997
- US-A- 2 857 998
- US-A- 3 425 529
- US-A- 4 793 457
- US-A- 5 009 297
- US-A- 5 862 902
- US-A1- 2008 060 901

## Description

### TECHNICAL FIELD OF INVENTION

The invention relates to a compressor used in an air conditioning system, more specifically to an electromagnetic clutch device for the compressor.

### BACKGROUND

In vehicle air conditioning systems, compressors are only operated when needed. Thus, in order to couple the compressor to a drive mechanism, the compressor typically includes a rotatable crank shaft, a rotatable pulley assembly to be driven via a belt or a chain, and a clutch coupling and decoupling the crank shaft and the pulley assembly.

Customarily, electromagnetic clutches are used that include a coil that, when energized bring an armature plate in contact with the rotor body. The armature plate, which is mounted on the crank shaft in a rotationally fixed and axially displaceable manner, is thus frictionally coupled to the pulley assembly and rotates therewith. Thus, a rotation of the pulley assembly results in a rotation of the crank shaft. Such an electromagnetic clutch is e.g. known from US 4 793 457 A.

While this type of arrangement is generally known and reliable, it is an objective of the present invention to optimize the function of the clutch.

### SUMMARY

According to the present invention, an electromagnetic clutch device for a compressor comprises a crank shaft with an inner shaft end accommodated in a compressor housing and with an outer shaft end projecting axially out of the compressor housing. Further, a pulley assembly, with a rotor body and a pulley fixedly attached thereto, has a toroidal cavity accommodating a coil housing and is rotatably supported on the compressor housing by a pulley bearing. The coil housing includes a radially inner annular wall, a radially outer annular wall, an axially open end facing the outer shaft end, and a bottom extending radially from the radially inner annular wall to the radially outer annular wall at an axial end of the coil housing proximate the inner shaft end. An armature plate adjacent the rotor body is connected to the outer shaft end in an axially displaceable manner so as to rotate with the crank shaft. The inner annular wall and the outer annular wall of the coil housing each have an outer surface, the outer surfaces having a greater distance from one another near the bottom of the coil housing than proximate the axially open end. This allows for a greater magnetic flux through the coil housing than previously possible without affecting the space available for the coil within the coil housing.

Furthermore, the inner annular wall has a greater axial length than the outer annular wall for a more even distribution of the magnetic flux density over the cross-section of the coil housing.

Additional material is preferably provided in such a manner that the inner annular wall of the coil has a first thickness near the bottom of the coil housing and a second thickness at the axially open end, that the outer annular wall has a third thickness near the bottom of the coil housing and a fourth thickness at the axially open end, so that the difference between the first thickness and the second thickness is greater than the difference between the third thickness and the fourth thickness.

Preferably, the first thickness is greater than the second thickness by 40% to 100%, in particular by 50% to 80%.

Further, preferably, the third thickness is greater than the fourth thickness by at most 50%, in particular by 15% through 30%.

According to one aspect of the invention, the material added to the coil housing is distributed in such a manner that the inner annular wall of the coil housing has a top distance from the crank shaft at the top end and a bottom distance from the crank shaft at the bottom end, and that a sloped portion disposed between the top end and the bottom end forms a taper connecting the different distances from the crank shaft.

For example, the top portion and the bottom portion of the inner annular wall may be cylindrical. This geometry allows for easy modeling by simulations moving the taper closer to the bottom or to the open end of the coil housing.

According to another aspect of the invention, the material added to the coil housing is distributed in such a manner that the outer annular wall of the coil housing has a top distance from the crank shaft at the top end and a bottom distance from the crank shaft at the bottom end, and that a sloped portion disposed between the top end and the bottom end forms a taper connecting the different distances from the crank shaft.

For example, the top portion and the bottom portion of the outer annular wall may be cylindrical. This geometry allows for easy modeling by simulations moving the taper closer to the bottom or to the open end of the coil housing.

For simplifying the manufacturing process, the pulley and the rotor body may be formed as one monolithic part.

Further details and benefits will become apparent from the following description of the accompanying drawings. The drawings are provided purely for illustrative purposes and are not intended to limit the scope of the present invention.

### BRIEF DESCRIPTION OF THE DRAWINGS

In the drawings,
Fig. 1 shows a side view of a compressor with a pulley assembly;
Fig. 2 shows a cross-section through a pulley assembly, a customary clutch, and a crank shaft of a compressor of the type shown in Fig. 1;
Fig. 3A shows a simulation of the magnetic flux density in a pulley assembly as shown in Fig. 2;
Fig. 3B shows magnetic flux lines through a pulley assembly as shown in Fig. 2;
Fig. 4 shows a simulation of the magnetic flux density in a pulley assembly according to a first embodiment of the present invention;
Fig. 5 shows a cross-section through a pulley assembly and a clutch similar to the embodiment of Fig. 4, but with a different pulley assembly;
Fig. 6 shows a simulation of the magnetic flux density in a pulley assembly according to a third embodiment of the present invention;
Fig. 7 shows a simulation of the magnetic flux density in a pulley assembly according to a fourth embodiment of the present invention; and
Fig. 8 shows a simulation of the magnetic flux density in a pulley assembly according to a fifth embodiment of the present invention.

### DETAILED DESCRIPTION

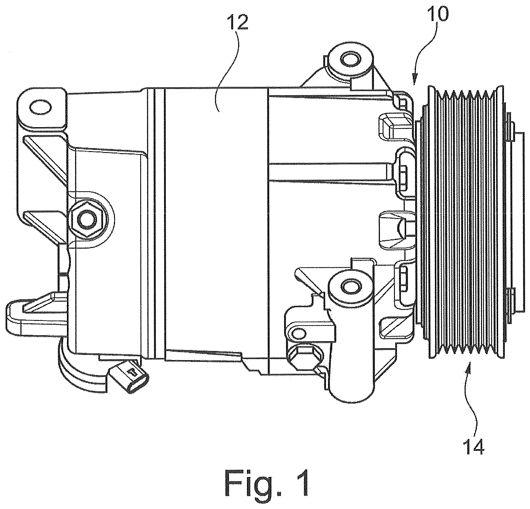

As shown in Fig. 1, a compressor 10 for an automobile includes a compressor housing 12 and a pulley assembly 14. The pulley assembly 14 includes a rotor body 16 and a pulley 18 with sheaves 20. The pulley assembly 14 is rotatably mounted onto the compressor housing 12 and is adapted to engage a belt or chain (not shown) that transfers rotational movement to the pulley assembly 14 from the engine of the automobile or alternatively from an electric motor. In the shown embodiments, the rotor body 16 and the pulley 18 are shown as one monolithic part. The pulley assembly 14 may, however also be formed from a rotor body 16 and a pulley 18 that are fixedly secured to each other in a suitable manner.

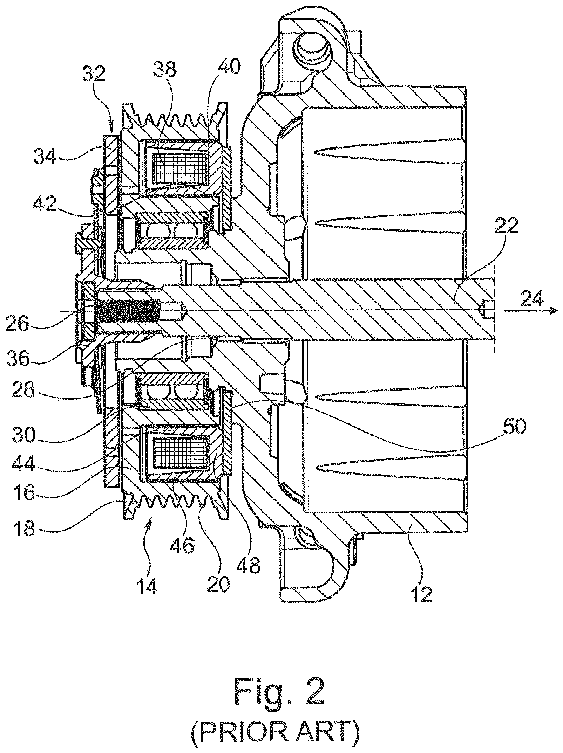

As shown in Fig. 2, the compressor 10 includes a crank shaft 22 that is rotatably mounted within the compressor housing 12. The crank shaft has an inner end 24 inside the compressor housing and an outer end 26 projecting out of the compressor housing. The crank shaft 22 drives the inner components of the compressor 10 that are not shown in greater detail. The crank shaft 22 is supported within the compressor 10 by a shaft bearing 28. This shaft bearing 28 allows the crank shaft 22 to rotate relative to the compressor housing 12. The pulley assembly 14 is supported on the compressor housing 12 by a pulley bearing 30. The pulley bearing 30 allows the pulley assembly 14 to rotate relative to the compressor housing 12.

The compressor 10 includes an electromagnetic clutch 32 to selectively connect the pulley assembly 14 to the crank shaft 22 such that rotation of the pulley assembly 14 is transferred to the crank shaft 22 to drive the compressor 10. The electromagnetic clutch 32 includes an armature plate 34 that is mounted onto the outer end 26 of the crank shaft 22 via a clutch hub 36. The armature plate 34 is mounted in such a way that the armature plate 34 rotates with the crank shaft 22, but is allowed to move axially with respect to the crank shaft 22 and the compressor housing 12.

The armature plate 34 has a disengaged position, in which an axial gap exists between the armature plate 34 and the pulley assembly 14. In this position, the pulley assembly 14 is free to rotate relative to the crank shaft 22, and no rotational motion is transferred to the armature plate 34.

However, the armature plate 34 can move to an engaged position where the armature plate 34 contacts the rotor body 16. When the armature plate 34 is in contact with the rotor body 16, friction between the rotor body 16 and the armature plate 34 will cause the rotational movement of the pulley assembly 14 to be transferred from the rotor body 16 to the armature plate 34 and thus to the crank shaft 22.

Within the rotor body 16, an electromagnetic coil assembly 38 is disposed in a toroidal cavity 40. The coil assembly 38 includes at least one coil in a coil housing 42 extending around the crank shaft 22 and placed in the toroidal cavity 40. The coil housing 42 has an axial inner annular wall 44, an axial outer annular wall 46, and a radially extending annular bottom 48 radially extending from the outer annular wall 46 to the inner annular wall 44. The bottom 48 of the coil housing 42 closes the open side of the toroidal cavity 40 of the rotor body 16 that faces the inner end 24 of the crank shaft 22. A ring disc radially 50 extending between the compressor housing 12 and the coil housing 42 protects the pulley bearing 30 from contamination.

When a current flows through the coil assembly 38, a magnetic field is generated. The coil housing 42 directs the electromagnetic field axially outward through the bottom of the rotor body 16 and across the gap, such that the magnetic field draws the armature plate 34 axially toward the rotor body 16. Once the armature plate 34 contacts the rotor body 16, the magnetic field will keep the armature plate 34 in contact with the rotor body 16 so that a rotational movement from the pulley assembly 14 will be frictionally transferred to the armature plate 34.

An objective of a typical clutch design is to maximize magnetic strength to engage the armature plate 34 and minimize the power consumption.

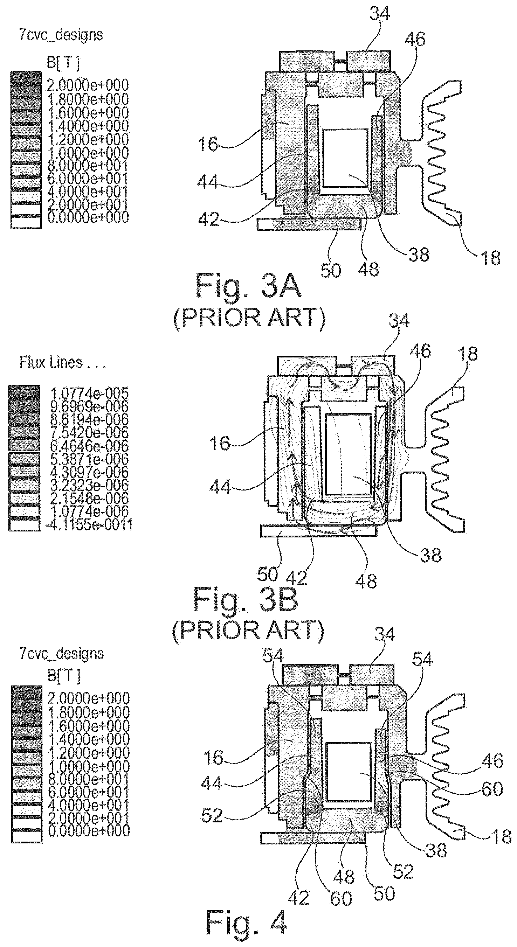

A common arrangement of current clutch technology provides that the rotor body 16 and the coil assembly 38 are nested with one another. This typical arrangement may be less than ideal because it may result in a localized magnetic flux saturation of the surrounding steel. This localized magnetic flux saturation of the steel puts a limit on the entire magnetic flux circuit in the clutch 32. The magnetic flux saturation thus limits the magnetic attraction of the armature plate 34 and thereby the clutch strength by reducing the magnetomotive force exerted by the coil assembly 38. The magnetomotive force is the product of current flow multiplied by the number of windings ("turns") in a given coil design and is represented in units of Ampere-turns, where 1 Ampere-turn is the magnetomotive force generated by a direct current of 1 Ampere flowing in a coil of 1 winding. This magnetomotive force is used to simulate the magnetic pull force for a given clutch design. This restriction of the magnetomotive force due to magnetic flux saturation can be seen in Figure 3, near the bottom 48 of the coil housing 42.

In a transitional area, in which the bottom 48 of the coil housing 42 meets the inner annular wall 44 and the outer annular wall 46 of the coil housing 42, the magnetic flux has a very high density and is saturated due to the lack of steel material to transmit the magnetic flux. This lack of material causes a bottleneck effect on the magnetic flux.

The shape of the pulley 18 and the pulley size place limits on how much additional material can be added to the coil housing 42 in the transitional area. The pulley 18, however, is undersaturated with magnetic flux near the transitional area of the coil housing 42. For generating a sufficient magnetic flux, less material is required in this portion of the pulley 18 because the magnetic flux density in the remaining material can be increased without excessive saturation.

This realization helps in constructing a paired assembly of a rotor body 16 and a coil housing 42 that mitigates the saturation in the transitional area of the coil housing 42.

According to a first aspect of the invention, the annular walls 44 and 46 of the coil housing 42 are thicker in a bottom portion 52 of the coil housing 42 than remote from the bottom 48 of the coil housing 42. This is accomplished by placing the outer surfaces 56 and 58 of the inner annular wall 44 and of the outer annular wall 46 farther apart from each other near the bottom 48 of the coil housing 42 than near the open axial end of the coil housing 42. The material added to the coil housing 42 thus does not affect the interior space of the coil housing 42 that accommodates the coil assembly 38.

The cross-section of the interior space of the coil housing 42 remains generally cylindrical or slightly trapezoidal as generally known from the prior art. Although the interior space may widen slightly between the inner and outer annular walls 44 and 46 in the axial direction from the bottom 48 of the coil housing 42 to the open end of the coil housing 42, the distance of the inner walls increases by a lesser amount than the amount by which the distance of the outer surfaces 56 and 58 is reduced in the axial direction from the bottom 48 of the coil housing 42 to the open end. In terms of wall thicknesses, the added material near the bottom 48 of the coil housing 42 increases the thickness of the inner annular wall 44 by 40% to 100% of the wall thickness near the axially open end, preferably by 50% to 80%. The thickness of the outer annular wall 46 is increased by up to 50%, preferably by 15% through 30%.

Conversely, because the bottom portion 52 of the coil housing 42 is now wider than in customary arrangements, a similar amount of material is removed from the rotor body 16. The toroidal cavity 40 of the rotor body 16 thus widens in a direction from the armature plate 34 toward the bottom 48 of the coil housing 42. Accordingly, the paired rotor body 16 and coil housing 42 nest in conjunction with each other.

The expanded design of the bottom portion 52 of the coil housing 42 allows more material to be in the bottom portion 52 of the coil housing 42 to lessen the restriction of the magnetic flux. Likewise, on the rotor body 16, the area in the vicinity of the bottom portion 52, which is under-saturated with magnetic flux density in conventional designs, contains less material where it can still achieve the same overall magnetic flux necessary for this area via an increased magnetic flux density.

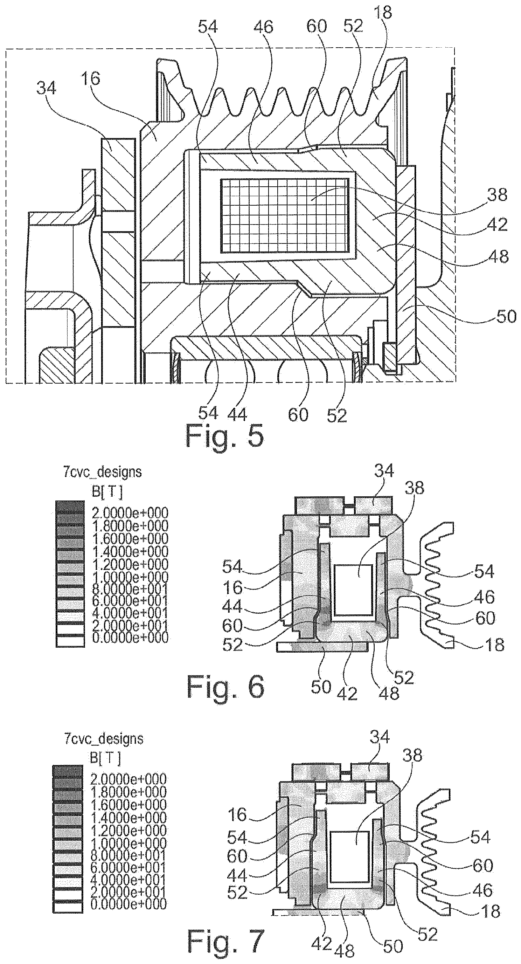

Figures 4 and 5 show a first embodiment of the invention with a widened bottom portion 52 of the coil housing 42. The inner and outer annular walls 44 and 46 lessen the magnetic flux density in the bottom portion 52 of the coil housing 42, while the conventionally undersaturated areas of the rotor body 16 reach a higher magnetic flux density than in conventional designs, which is an indication that saturation has just started.

In the embodiment of Figs. 4 and 5, the annular walls 44 and 46 of the coil housing 42 are composed of three portions. In the bottom portion 52 near the bottom 48 of the coil housing 42 the inner and outer annular walls 44 and 46 have outer surfaces 56 and 58 that extend generally parallel to each other. In a top portion 54 adjacent to the open end of the coil housing 42, the outer surfaces 56 and 58 of the inner and outer annular walls 44 and 46 also extend parallel to each other, however at a smaller distance from each other than in the bottom portion 52. A sloped portion 60 connecting the top portion 54 and the bottom portion 52 includes a taper that creates a transition between the greater distance of the outer surfaces 56 and 58 of the bottom portion 52 and the smaller distance of the outer surfaces 56 and 58 of the top portion 54.

Because more material can be removed from the rotor body 16 radially inward from the annular coil housing 42, i.e. on the side facing the crank shaft 22, than radially outward, the radially inward taper of the inner annular wall 44 of the coil housing 42 toward the coil housing bottom 48 may bridge a greater radial step with respect to the distance from the crank shaft 22 than the radially outward taper on the outer annular wall 46 of the coil housing 42. Thus, more material is added to the outer surface 56 of the inner annular wall 44 of the coil housing 42 than to the outer surface 58 of the outer annular wall 46. Thus, the inner annular wall 44 of the coil housing 42 exhibits a greater difference in thickness between the thickness D1 of the bottom portion 52 and the thickness D2 at the open end in the top portion 54 of the coil housing 42 than the difference between the thickness D3 of the outer annular wall 46 in the bottom portion 52 and the thickness D4 in the top portion 54.

The geometry of the coil housing 42 and the pulley 18 can be manipulated in a virtual model until the magnetic flux density is most evenly distributed over the cross-section of the coil housing 42 and potentially even over the cross-section of the rotor body 16. A uniform distribution is likely not attainable due to the geometrical limitations. But a significant improvement over conventional arrangements can be achieved to maximize the magnetic pull force. The maximized pull force allows a design to reduce the amount of magnet wire used in the coil assembly 38, resulting in lower mass and cost. Possibly, a smaller coil assembly 38 can be used, which also reduces the packaging size and reduces the overall length of the pulley 18, thereby further reducing the amount of steel required for the pulley assembly 14.

Figures 6 and 7 show variations of the embodiment of Figs. 4 and 5. In Fig. 6, the sloped portion 60 is moved closer to the bottom 48 of the coil housing 42 so that the top portion 54 occupies most of the inner and outer annular walls 44 and 46. Conversely, in Fig. 7, the top portion 54 is shortened by moving the sloped portion 60 upward relative to the embodiment of Figs. 4 and 5. Figs. 6 and 7 illustrate the effects of varying the location of the sloped portion 60 of the coil housing 42 that extends between the widened bottom portion 52 and the top portion 54 that has not been widened.

Figs. 6 and 7 also illustrate how the shape of the toroidal cavity 40 within the rotor body 16 is adapted to the shape of the coil housing 42 with corresponding tapers in the wall of the toroidal cavity 40. The taper could be added on the inside surfaces of the annular walls 44 and 46 of the coil housing 42 to widen the bottom portion 52 but the addition of material in this area is limited due to the size of the coil assembly 38, which is made of copper or aluminum wire.

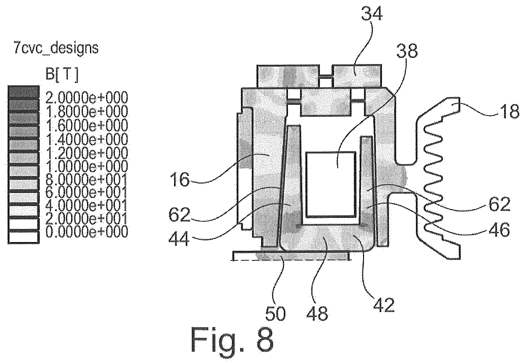

As shown in Fig. 8, an alternative manner of adding material to the bottom portion 52 of the coil housing 42 involves adding a cross sectional taper 62 to the outside surfaces of the annular walls 44 and 46 of the coil housing 42 along the entire axial length of the inner and outer annular walls 44 and 46 of the coil housing 42. This taper 62 extends the sloped portion 60 of the embodiments of Figs. 4 through 7 over the entire axial length of the coil housing 42. As previously mentioned, adding the taper cross section inside the coil housing 42 has a negative side effect of restricting the coil size and thereby the magnetomotive force achievable with a standard coil in the remaining space. The toroidal cavity 40 of the pulley 18 is correspondingly tapered and widens toward the bottom 48 of the coil housing 42.

As a result, the greatest distance between the outer surfaces 56 and 58 of the inner and outer walls of the coil housing 42 exists in the bottom portion 52 of the coil housing 42, which is the portion axially closest to the bottom 48 of the coil housing 42. Conversely, like in Figs 4-7, the smallest distance between these two outer surfaces 56 and 58 is found near the open end of the coil housing 42, axially opposite the bottom 48 of the coil housing 42.

Because more material can be removed from the pulley 18 radially inward from the annular coil housing 42 with respect to the axis of rotation than radially outward, the radially inward taper 62 of the inner annular wall 44 of the coil housing 42 toward the coil housing bottom 48 may form a greater angle with respect to the axis of rotation than the radially outward taper 62 on the outer annular wall 46 of the coil housing 42. Thus, like in the prior examples, the inner annular wall 44 of the coil housing 42 exhibits a greater different in thickness between the bottom portion 52 and the open end of the coil housing 42 than the outer annular wall 46. As shown in Fig. 8, for example, the entire volume of added material may even be incorporated on the inner annular wall 44, while the outer annular wall 46 has a nearly cylindrical shape. The toroidal cavity 40 of the pulley 18 again has a complementary shape reflecting the inward and outward tapers 62 of the coil housing 42. The improved shapes of the coil housing 42 and the pulley 18 equalize the magnetic saturation of the arrangement while maintaining the space for the coil assembly 38.

In the drawings, the pulley 18 of Figs. 4 and 6-8 shows the pulley sheaves 20 formed on a ring-shaped disc extending radially from the rotor body 16 to the pulley sheaves 20. In contrast, Figs. 1, 2, and 5 show the sheaves 20 formed directly on the rotor body 16. While the radial separation of the sheaves 20 from the rotor body 16 as shown in figs. 4 and 6-8 may affect the magnetic flux density within the rotor body 16, the rationales provided are applicable to both designs and any other designs that provide a toroidal cavity 40 accommodating the coil assembly 38. Thus, the sheaves 20 can be dimensioned to have any desired diameter, while the coil housing 42 and the toroidal cavity 40 can be improved by applying the designs of any one of Figs. 4-8 or a combination of various designs. For example, the top and bottom portions 54 and 52 of figs. 4-7 could be tapered as well as shown in Fig. 8, and the sloped portion 60 may merely have a steeper slope than the top portion 54 and the bottom portion 52. Any other contours are feasible that add more material to the bottom portion 52 compared to the top portion 54.

Also, all embodiments show that the inner annular wall 44 has a greater axial length than the outer annular wall 46. Thus the inner annular wall 44 extends closer toward the armature plate 34 than the outer annular wall 46. In the shown examples, this geometry results in a more even distribution of the magnetic flux density. But the axial length of the inner and outer annular walls 44 and 46 of the coil housing 42 may be varied, for example in further simulations, to optimize the magnetic flux.

The benefit of the above arrangement is a lower requirement of coil wire for achieving the same magnetic force as in conventional designs. This results in reduced packaging space and lowered cost of the compressor 10 incorporating the novel clutch design. A copper (or aluminum) mass reduction of approximately 20-35% can be achieved compared to conventional designs.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the appended claims. Additionally, while various embodiments of the invention have been described, it is to be understood that aspects of the invention may include only some of the described embodiments.

## Claims

1. An electromagnetic clutch device for a compressor (1), comprising:
a crank shaft (22) with an inner shaft end (24) accommodated in a compressor housing (12) and with an outer shaft end (26) projecting axially out of the compressor housing (12);
a pulley assembly (14) having a rotor body (16) and a pulley (18) fixedly attached thereto, the rotor body (16) having a toroidal cavity accommodating a coil housing (42) and rotatably supported on the compressor housing (12) by a pulley bearing (30), wherein the coil housing (42) includes a radially inner annular wall (44), a radially outer annular wall (46), an axially open end facing the outer shaft end (26), and a bottom (48) extending radially from the radially inner annular wall (44) to the radially outer annular wall (46) at an axial end of the coil housing (42) proximate the inner shaft end (24); and
an armature plate (34) adjacent the rotor body (16) and connected to the outer shaft end (26) in an axially displaceable manner so as to rotate with the crank shaft;
**characterized in that**,
the inner annular wall (44) and the outer annular wall (46) of the coil housing (42) each have an outer surface (56, 58), the outer surfaces (56, 58) having a greater distance from one another near the bottom (48) of the coil housing (42) than proximate the axially open end, and
**in that** the inner annular wall (44) has a greater axial length than the outer annular wall (46).

2. The electromagnetic clutch device of claim 1, wherein the inner annular wall (44) of the coil has a first thickness near the bottom (48) of the coil housing (42) and a second thickness at the axially open end, and wherein the outer annular wall (46) has a third thickness near the bottom (48) of the coil housing (42) and a fourth thickness at the axially open end, wherein the difference between the first thickness and the second thickness is greater than the difference between the third thickness and the fourth thickness.

3. The electromagnetic clutch device of claim 2, wherein the first thickness is greater than the second thickness by 40% to 100%.

4. The electromagnetic clutch device of claim 3, wherein the first thickness is greater than the second thickness by 50% to 80%.

5. The electromagnetic clutch device of claim 2, wherein the third thickness is greater than the fourth thickness by at most 50%.

6. The electromagnetic clutch device of claim 5, wherein the third thickness is greater than the fourth thickness by 15% through 30%.

7. The electromagnetic clutch device of claim 1, wherein the inner annular wall (44) of the coil housing (42) has a top distance from the crank shaft at the top end (top portion 54) and a bottom distance from the crank shaft at the bottom end (bottom portion 52), wherein a sloped portion (60) disposed between the top end and the bottom end forms a taper connecting the different distances from the crank shaft (22).

8. The electromagnetic clutch device of claim 7, wherein a top portion (54) adjacent the top end of the inner annular wall (44) and a bottom portion (52) adjacent the bottom end of the inner annular wall (44) are cylindrical.

9. The electromagnetic clutch device of claim 1, wherein the outer annular wall (46) of the coil housing (42) includes a bottom portion adjoining the bottom of the coil housing (42) and a top portion adjoining the axially open end, the bottom portion and the op portion having different distances from the crank shaft, wherein a sloped portion disposed between the top portion and the bottom portion forms a taper connecting the different distances.

10. The electromagnetic clutch device of claim 9, wherein a top portion (54) adjacent the top end of the outer annular wall (46) and a bottom portion (52) adjacent the bottom end of the outer annular wall (46) are cylindrical.

11. The electromagnetic clutch device of claim 1, wherein the pulley (18) and the rotor body (16) are formed as one monolithic part.

## Patentansprüche

1. Elektromagnetische Kupplungsvorrichtung für einen Kompressor (1), umfassend:
eine Kurbelwelle (22) mit einem inneren Wellenende (24), das in einem Kompressorgehäuse (12) beherbergt ist, und mit einem äußeren Wellenende (26), das axial aus dem Kompressorgehäuse (12) vorspringt;
eine Scheibenbaugruppe (14), die einen Rotorkörper (16) und eine fest mit demselben verbundene Scheibe (18) aufweist, wobei der Rotorkörper (16) einen toroidförmigen Hohlraum aufweist, der ein Spulengehäuse (42) beherbergt, und über ein Scheibenlager (30) drehbar am Kompressorgehäuse (12) abgestützt ist, wobei das Spulengehäuse (42) eine radial innenliegende ringförmige Wand (44), eine radial außenliegende ringförmige Wand (46), ein axial offenes Ende, das dem äußeren Wellenende (26) zugewandt ist, und einen Boden (48) einschließt, der sich radial von der radial innenliegenden ringförmigen Wand (44) zur radial außenliegenden ringförmigen Wand (46) an einem axialen Ende des Spulengehäuses (42) nahe dem inneren Wellenende (24) erstreckt; und
eine Ankerplatte (34), die an den Rotorkörper (16) angrenzt und in einer axial verschiebbaren Weise so mit dem äußeren Wellenende (26) verbunden ist, dass sie mit der Kurbelwelle dreht;
**dadurch gekennzeichnet, dass**
die innere ringförmige Wand (44) und die äußere ringförmige Wand (46) des Spulengehäuses (42) jede eine äußere Fläche (56, 58) aufweisen, wobei die äußeren Flächen (56, 58) nahe dem Boden (48) des Spulengehäuses (42) einen größeren Abstand voneinander aufweisen als nahe dem axial offenen Ende, und
dadurch, dass die innere ringförmige Wand (44) eine größere axiale Länge aufweist als die äußere ringförmige Wand (46).

2. Elektromagnetische Kupplungsvorrichtung nach Anspruch 1, wobei die innere ringförmige Wand (44) der Spule nahe dem Boden (48) des Spulengehäuses (42) eine erste Dicke, und am axial offenen Ende eine zweite Dicke aufweist, und wobei die äußere ringförmige Wand (46) nahe dem Boden (48) des Spulengehäuses (42) eine dritte Dicke, und am axial offenen Ende eine vierte Dicke aufweist, wobei die Differenz zwischen der ersten Dicke und der zweiten Dicke größer ist als die Differenz zwischen der dritten Dicke und der vierten Dicke.

3. Elektromagnetische Kupplungsvorrichtung nach Anspruch 2, wobei die erste Dicke um 40 % bis 100 % größer ist als die zweite Dicke.

4. Elektromagnetische Kupplungsvorrichtung nach Anspruch 3, wobei die erste Dicke um 50 % bis 80 % größer ist als die zweite Dicke.

5. Elektromagnetische Kupplungsvorrichtung nach Anspruch 2, wobei die dritte Dicke um höchsten 50 % größer ist als die vierte Dicke.

6. Elektromagnetische Kupplungsvorrichtung nach Anspruch 5, wobei die dritte Dicke um 15 % bis 30 % größer ist als die vierte Dicke.

7. Elektromagnetische Kupplungsvorrichtung nach Anspruch 1, wobei die innere ringförmige Wand (44) des Spulengehäuses (42) einen oberen Abstand von der Kurbelwelle am oberen Ende (oberer Abschnitt 54), und einen unteren Abstand von der Kurbelwelle am unteren Ende (unterer Abschnitt 52) aufweist, wobei ein schräger Abschnitt (60), der zwischen dem oberen Ende und dem unteren Ende angeordnet ist, eine Verjüngung bildet, die die verschiedenen Abstände von der Kurbelwelle (22) verbindet.

8. Elektromagnetische Kupplungsvorrichtung nach Anspruch 7, wobei ein oberer Abschnitt (54), der an das obere Ende der inneren ringförmigen Wand (44) angrenzt, und ein unterer Abschnitt (52), der an das untere Ende der inneren ringförmigen Wand (44) angrenzt, zylindrisch sind.

9. Elektromagnetische Kupplungsvorrichtung nach Anspruch 1, wobei die äußere ringförmige Wand (46) des Spulengehäuses (42) einen unteren Abschnitt einschließt, der an den Boden des Spulengehäuses (42) anschließt, und einen oberen Abschnitt, der an das axial offene Ende anschließt, wobei der untere Abschnitt und der obere Abschnitt verschiedene Abstände von der Kurbelwelle aufweisen, wobei ein schräger Abschnitt, der zwischen dem oberen Abschnitt und dem unteren Abschnitt angeordnet ist, eine Verjüngung bildet, die die verschiedenen Abstände verbindet.

10. Elektromagnetische Kupplungsvorrichtung nach Anspruch 9, wobei ein oberer Abschnitt (54), der an das obere Ende der äußeren ringförmigen Wand (46) angrenzt, und ein unterer Abschnitt (52), der an das untere Ende der äußeren ringförmigen Wand (46) angrenzt, zylindrisch sind.

11. Elektromagnetische Kupplungsvorrichtung nach Anspruch 1, wobei die Scheibe (18) und der Rotorkörper (16) als ein einstückiges Teil gebildet sind.

## Revendications

1. Dispositif d'embrayage électromagnétique pour un compresseur (1), comprenant :
un arbre à manivelle (22) avec une extrémité d'arbre intérieure (24) logée dans un carter de compresseur (12) et avec une extrémité d'arbre extérieure (26) dépassant de façon axiale du carter de compresseur (12) ;
un ensemble poulie (14) ayant un corps de rotor (16) et une poulie (18) attachée de manière fixe à ce dernier, le corps de rotor (16) ayant une cavité toroïdale logeant un carter de bobine (42) et supporté en rotation sur le carter de compresseur (12) par un palier de poulie (30), dans lequel le carter de bobine (42) inclut une paroi annulaire intérieure de façon radiale (44), une paroi annulaire extérieure de façon radiale (46), une extrémité ouverte de façon axiale faisant face à l'extrémité d'arbre extérieure (26) et un fond (48) s'étendant de façon radiale depuis la paroi annulaire intérieure de façon radiale (44) jusqu'à la paroi annulaire extérieure de façon radiale (46) au niveau d'une extrémité axiale du carter de bobine (42) proche de l'extrémité d'arbre intérieure (24) ; et
une plaque d'armature (34) adjacente au corps de rotor (16) et reliée à l'extrémité d'arbre extérieure (26) d'une façon déplaçable de manière axiale afin de tourner avec l'arbre à manivelle ;
**caractérisé en ce que**,
la paroi annulaire intérieure (44) et la paroi annulaire extérieure (46) du carter de bobine (42) ont chacune une surface extérieure (56, 58), les surfaces extérieures (56, 58) ayant une distance plus grande de l'une à l'autre près du fond (48) du carter de bobine (42) qu'à proximité de l'extrémité ouverte de façon axiale, et
**en ce que** la paroi annulaire intérieure (44) a une longueur axiale plus grande que la paroi annulaire extérieure (46).

2. Dispositif d'embrayage électromagnétique selon la revendication 1, dans lequel la paroi annulaire intérieure (44) de la bobine a une première épaisseur près du fond (48) du carter de bobine (42) et une deuxième épaisseur au niveau de l'extrémité ouverte de façon axiale, et dans lequel la paroi annulaire extérieure (46) a une troisième épaisseur près du fond (48) du carter de bobine (42) et une quatrième épaisseur au niveau de l'extrémité ouverte de façon axiale, dans lequel la différence entre la première épaisseur et la deuxième épaisseur est plus grande que la différence entre la troisième épaisseur et la quatrième épaisseur.

3. Dispositif d'embrayage électromagnétique selon la revendication 2, dans lequel la première épaisseur est plus grande que la deuxième épaisseur de 40 % à 100 %.

4. Dispositif d'embrayage électromagnétique selon la revendication 3, dans lequel la première épaisseur est plus grande que la deuxième épaisseur de 50 % à 80 %.

5. Dispositif d'embrayage électromagnétique selon la revendication 2, dans lequel la troisième épaisseur est plus grande que la quatrième épaisseur d'au plus 50 %.

6. Dispositif d'embrayage électromagnétique selon la revendication 5, dans lequel la troisième épaisseur est plus grande que la quatrième épaisseur de 15 % à 30 %.

7. Dispositif d'embrayage électromagnétique selon la revendication 1, dans lequel la paroi annulaire intérieure (44) du carter de bobine (42) a une distance supérieure à partir de l'arbre à manivelle au niveau de l'extrémité supérieure (portion supérieure 54) et une distance inférieure à partir de l'arbre à manivelle au niveau de l'extrémité inférieure (portion inférieure 52), dans lequel une portion inclinée (60) disposée entre l'extrémité supérieure et l'extrémité inférieure forme une partie tronconique reliant les différentes distances depuis l'arbre à manivelle (22).

8. Dispositif d'embrayage électromagnétique selon la revendication 7, dans lequel une portion supérieure (54) adjacente à l'extrémité supérieure de la paroi annulaire intérieure (44) et une portion inférieure (52) adjacente à l'extrémité inférieure de la paroi annulaire intérieure (44) sont cylindriques.

9. Dispositif d'embrayage électromagnétique selon la revendication 1, dans lequel la paroi annulaire extérieure (46) du carter de bobine (42) inclut une portion inférieure contiguë au fond du carter de bobine (42) et une portion supérieure contiguë à l'extrémité ouverte de façon axiale, la portion inférieure et la portion supérieure ayant des distances différentes depuis l'arbre à manivelle, dans lequel une portion inclinée disposée entre la portion supérieure et la portion inférieure forme une partie tronconique reliant les différentes distances.

10. Dispositif d'embrayage électromagnétique selon la revendication 9, dans lequel une portion supérieure (54) adjacente à l'extrémité supérieure de la paroi annulaire extérieure (46) et une portion inférieure (52) adjacente à l'extrémité inférieure de la paroi annulaire extérieure (46) sont cylindriques.

11. Dispositif d'embrayage électromagnétique selon la revendication 1, dans lequel la poulie (18) et le corps de rotor (16) sont formés comme une partie monolithique.
